# EUROPÄISCHE PATENTSCHRIFT

(11) **EP 0 595 190 B1**
(45) Veröffentlichungstag und Bekanntmachung des Hinweises auf die Patenterteilung: **23.04.1997**
(21) Anmeldenummer: 93117026.0
(22) Anmeldetag: 21.10.1993
(51) Int. Cl.: B29C 47/40

(54) **Doppelschneckenextruder**
Double-screw extruder
Extrudeuse à deux vis

(30) Priorität: 29.10.1992 DE 4236496
(43) Veröffentlichungstag der Anmeldung: 04.05.1994
(73) Patentinhaber: FRIEDRICH THEYSOHN GmbH, D-30853 Langenhagen (DE)
(72) Erfinder: Eigruber, Horst, McPherson, Kansas 67460 (US)
(74) Vertreter: Döring, Roger, Dipl.-Ing.

(56) Entgegenhaltungen:
- US-A- 2 908 226
- US-A- 3 804 382
- KUNSTSTOFFE Bd. 68, Nr. 11 , November 1978 Seiten 753 - 758 H. HERRMANN ET AL. 'Geschwindigkeits- und Schubspannungsverteilungen in dicht kämmenden Gleichdrall- und Gegendrall-Dopelschnecken'

## Beschreibung

Die Erfindung bezieht sich auf einen Doppelschneckenextruder, bestehend aus einem Schneckengehäuse und zwei drehbar in demselben gelagerten, miteinander kämmenden Schnecken, bei welchem das Schneckengehäuse zwei in einer Ebene nebeneinander liegende und ineinander übergehende Bohrungen aufweist, die zusammen eine Querschnittsumrandung in Form einer offenen "8" haben, bei welchem jede Schnecke einen langgestreckten Grundkörper mit geradlinig verlaufender Achse und einem nach außen abstehenden, in schraubenlinienförmigen Windungen verlaufenden Steg aufweist und bei welchem die Windungen des Steges der einen Schnecke in die Lücken zwischen den Windungen des Steges der anderen Schnecke eingreifen (DE-PS 31 40 188).

Unter "Doppelschneckenextruder" sollen alle üblichen Plastifiziervorrichtungen, Strangpressen und Spritzgießmaschinen verstanden sein, die mit zwei nebeneinander liegenden Schnecken ausgerüstet sind. Der Einfachheit halber wird im folgenden statt des Wortes "Doppelschneckenextruder" das kürzere Wort "Extruder" verwendet. Solche Extruder werden auf allen Gebieten der Technik zur Herstellung von Formteilen aus Kunststoff oder auch aus Gummi eingesetzt. Gegenüber Extrudern mit nur einer Schnecke haben sie den Vorteil, daß das zu verarbeitende Material gleichmäßiger ausgetragen wird. Das Schneckengehäuse für eine solche Doppelschnecke ist so gestaltet, daß die Öffnung in demselben die Form einer "8" hat, d. h. also, die Bohrungen für die beiden Schnecken sind an der Berührungsstelle zueinander offen. Die beiden, eine solche Öffnung darstellenden Bohrungen können durchgehend zylindrisch, mit gleichbleibendem Durchmesser ausgebildet sein, sie können jedoch auch konisch ausgeführt sein. Die Schnecken sind analog dazu ebenfalls zylindrisch oder konisch gestaltet.

Da die Schnecken sich im Schneckengehäuse drehen und der Spalt zwischen den Schnecken und der Oberfläche des Schneckengehäuses sehr klein sein muß, damit der erforderliche Druck zum Verspritzen des Materials aufgebaut werden kann, sind die innere Oberfläche des Schneckengehäuses und die äußeren Oberflächen der Stege mit verschleißfesten Schichten überzogen. Trotzdem ist der Verschleiß der inneren Oberfläche des Schneckengehäuses bei bekannten, beispielsweise in der eingangs erwähnten DE-PS 31 40 188 beschriebenen Extrudern relativ hoch. Sie müssen daher schon nach relativ kurzer Zeit repariert werden. Das liegt insbesondere daran, daß die beiden Schnecken beim Betrieb des Extruders durch das von denselben geförderte und im Spalt zwischen den beiden Schnecken befindliche Material auseinander gedrückt werden. Sie werden dadurch insbesondere im Bereich ihrer freien Enden mit erhöhter Kraft gegen die Oberfläche des Schneckengehäuses gedrückt, was zu dem erhöhten Verschleiß führt.

Der Erfindung liegt die Aufgabe zugrunde, den eingangs geschilderten Extruder so zu gestalten, daß der Verschleiß zwischen Schnecken und Schneckengehäuse vermindert ist.

Diese Aufgabe wird gemäß der Erfindung dadurch gelöst, daß die Stege der beiden Schnecken einen trapezförmigen Querschnitt haben und sich vom Grundkörper ausgehend nach außen erweitern.

Durch die trapezförmige Gestaltung der Stege mit sich nach außen erweiternden Abmessungen werden die Kräfte, welche die beiden Schnecken beim Betrieb des Extruders auseinander drücken, wesentlich reduziert. Es ergibt sich in den Flankenbereichen der Stege jeweils eine überlappende Zone zwischen den ineinander greifenden Stegen der beiden kämmenden Schnecken, in denen keine einen Spreizdruck hervorrufenden Kräfte wirksam werden. Hinzu kommt, daß die Außenflächen der Stege durch deren trapezförmige Gestaltung vergrößert werden, so daß sich die Tragkraft des auf diesen Außenflächen befindlichen Films aus aufgeschmolzenem Material erhöht. Der Verschleiß zwischen Schnecken und Schneckengehäuse wird insgesamt wesentlich vermindert. Die Standzeit des Extruders wird dementsprechend erhöht.

Ein Ausführungsbeispiel des Erfindungsgegenstandes ist in den Zeichnungen dargestellt.

Es zeigen:
Fig. 1 in schematischer Darstellung einen Extruder nach der Erfindung.
Fig. 2 eine Einzelheit aus Fig. 1 in vergrößerter Darstellung.
Fig. 3 den Konturenverlauf der ineinander greifenden Stege der Schnecken in nochmals vergrößerter Darstellung.

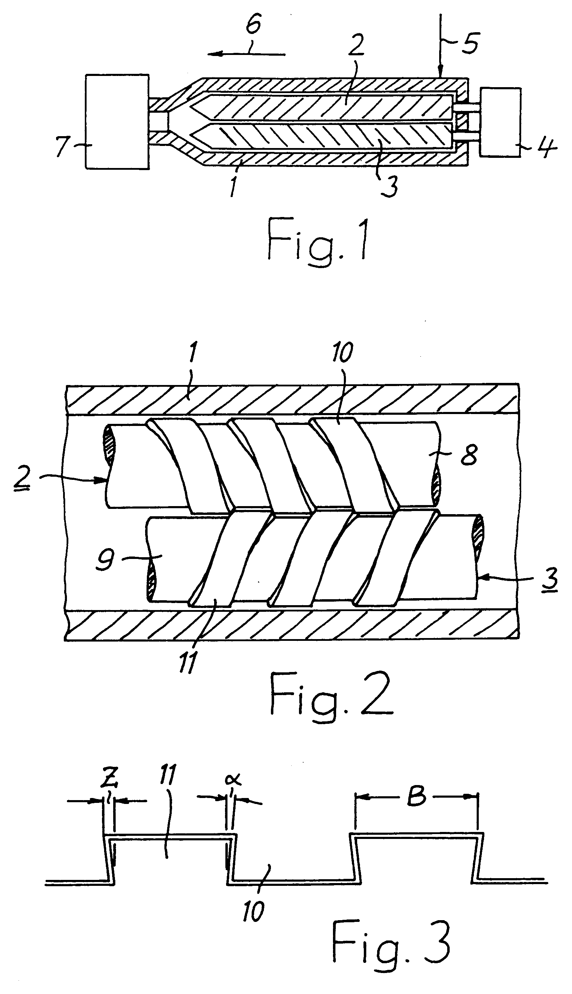

Der in Fig. 1 dargestellte Extruder hat ein Schneckengehäuse 1, in dem zwei Schnecken 2 und 3 nebeneinander angeordnet sind. Die Schnecken 2 und 3 bestehen aus einem langgestreckten Grundkörper und einem nach außen abstehenden, schraubenlinienförmig verlaufenden Steg. Die Stege der beiden Schnecken 2 und 3 sind durch schräge Linien angedeutet. Die Schnecken 2 und 3 sind in Fig. 1 zylindrisch dargestellt. Sie können bei entsprechender Ausbildung des Schneckengehäuses 1 auch konisch ausgeführt sein. Die Schnecken 2 und 3 kämmen miteinander. Beim Betrieb des Extruders werden die Schnecken 2 und 3 von einer Antriebseinheit 4 um ihre Achsen gedreht. In Richtung des Pfeiles 5 in den Extruder eingefülltes Material - im folgenden "Kunststoff" genannt - wird dadurch in Richtung des Pfeiles 6 zu einem Werkzeug 7 bewegt. Aus dem Werkzeug 7 tritt kontinuierlich ein Profilkörper aus.

Der Aufbau der Schnecken 2 und 3 geht in vergrößerter Darstellung aus dem in Fig. 2 dargestellten Ausschnitt des Extruders nach Fig. 1 hervor:

Von den zylindrischen Grundkörpern 8 und 9 der Schnecken 2 und 3 stehen die schraubenlinienförmig verlaufenden Stege 10 und 11 nach außen ab. Sie liegen mit ihren Außenflächen nahezu an der inneren Oberfläche des Schneckengehäuses 1 an. Die Schnecken 2 und 3 liegen so nahe nebeneinander, daß ihre Stege 10 und 11 kämmen. Die Windungen des Steges 10 greifen also in die Lücken zwischen den Windungen des Steges 11 ein und umgekehrt. Der zu verarbeitende Kunststoff wird durch die Drehung der beiden Schnecken 2 und 3 in Richtung des Werkzeugs 7 (Fig. 1) bewegt. Er tritt dabei durch die Spalte zwischen den beiden Schnecken 2 und 3 einerseits und zwischen den Schnecken 2 und 3 und dem Schneckengehäuse 1 andererseits hindurch.

Durch den zwischen den beiden Schnecken 2 und 3 befindlichen Kunststoff wird ein Spreizdruck auf dieselbe ausgeübt, der eine Auslenkung der Schnecken 2 und 3 in Richtung der Wandung des Schneckengehäuses 1 bewirken kann. Zur Herabsetzung der dabei entstehenden Druckkräfte haben die Stege 10 und 11 der beiden Schnecken 2 und 3 einen trapezförmigen Querschnitt. Sie erweitern sich entsprechend der nur die Konturen der Stege 10 und 11 zeigenden Darstellung in Fig. 3 symmetrisch nach außen. Es entstehen dadurch in "Überlappungsbereichen" der Stege 10 und 11 Zonen Z, in denen keine Spreizkräfte auftreten. Der insgesamt zwischen den beiden Schnecken 2 und 3 entstehende Spreizdruck kann dadurch wesentlich vermindert werden. Der entsprechend verringerte Verschleiß der Innenfläche des Schneckengehäuses 1 führt zu einer erhöhten Standzeit des Extruders.

Hinzu kommt, daß die Breite B der Stege 10 und 11 an ihren Außenflächen durch den trapezförmigen Verlauf größer wird. Dadurch werden auch die Außenflächen der Stege 10 und 11 und damit die Tragkraft der Schmelzfilme größer, die zwischen den Stegen 10 und 11 und der Wandung des Schneckengehäuses 1 vorhanden sind. Die Standzeit des Extruders wird dadurch weiter erhöht.

Die Flanken der Stege 10 und 11 verlaufen entsprechend dem trapezförmigen Querschnitt schräg. Der Winkel α dieser Schräge liegt zweckmäßig nicht über 5°. Es muß auf jeden Fall sichergestellt sein, daß die Windungen der Stege 10 und 11 beim Zusammenbau des Extruders ineinander passen.

## Patentansprüche

1. Doppelschneckenextruder, bestehend aus einem Schneckengehäuse und zwei drehbar in demselben gelagerten, miteinander kämmenden Schnecken, bei welchem das Schneckengehäuse zwei in einer Ebene nebeneinander liegende und ineinander übergehende Bohrungen aufweist, die zusammen eine Querschnittsumrandung in Form einer offenen "8" haben, bei welchem jede Schnecke einen langgestreckten Grundkörper mit geradlinig verlaufender Achse und einem nach außen abstehenden, in schraubenlinienförmigen Windungen verlaufenden Steg aufweist und bei welchem die Windungen des Steges der einen Schnecke in die Lücken zwischen den Windungen des Steges der anderen Schnecke eingreifen, dadurch gekennzeichnet, daß die Stege (10,11) der beiden Schnecken (2,3) einen trapezförmigen Querschnitt haben und sich vom Grundkörper (8,9) ausgehend nach außen erweitern.

2. Doppelschneckenextruder nach Anspruch 1, dadurch gekennzeichnet, daß die seitlichen, entsprechend dem trapezförmigen Querschnitt schrägen Flanken der Stege (10,11) unter einem Winkel (α) von maximal 5° verlaufen.

## Claims

1. A double-worm extruder, comprising a worm housing and two screws pivoted within the same and meshing with one another, in which the worm housing has a pair of adjacent laterally overlapping bores, defining an open figure eight cross section therein, in which each screw has a longitudinally extending basis body with a straight-lined axis and is formed with a helical rib projecting therefrom and in which the windings of the rib of the one screw project into the gaps between the windings of the rib of the other screw, charaterized in that the ribs (10,11) of the two screws (2,3) each being of trapezoidal cross section between outwardly diverging flanks.

2. The double-worm extruder according to claim 1, characterized in that the flanks of the ribs (10,11) include an angle (α) with radial planes of the respective screw (2,3) of at most 5°.

## Revendications

1. Extrudeuse à vis sans fin, se composant d'un carter de vis et de deux vis sans fin, logées de manière rotative dans ce dernier et s'engrènant entre elles, le carter de vis présentant deux perçages qui sont placés dans un plan l'un à côté de l'autre, qui se fondent l'un dans l'autre et qui ont en commun une bordure de section transversale en forme de "8" ouvert, chaque vis présentant un corps de base allongé avec un axe rectiligne et une nervure, saillante vers l'extérieur et s'étendant en spires hélicoïdales et les spires d'une nervure d'une vis sans fin s'engageant dans les interstices entre les spires de la nervure de l'autre vis sans fin, caractérisée en ce que les nervures (10, 11) des deux vis sans fin (2, 3) ont une section transversale et s'élargissent vers l'extérieur en partant du corps de base (8, 9).

2. Extrudeuse à vis sans fin selon la revendication 1, caractérisée en ce que les flancs latéraux en biais, des nervures (10, 11), correspondant à la section transversale trapézoïdale, s'étendent suivant un angle (α) de maximum 5°.
